# EUROPÄISCHE PATENTSCHRIFT

(11) **EP 2 812 561 B1**
(45) Veröffentlichungstag und Bekanntmachung des Hinweises auf die Patenterteilung: **06.04.2016**
(21) Anmeldenummer: 13701441.1
(22) Anmeldetag: 25.01.2013
(51) Int. Cl.: F02M 61/16, F02M 37/22

(54) **VENTIL ZUM ZUMESSEN EINES STRÖMENDEN MEDIUMS**
VALVE FOR METERING A FLOWING MEDIUM
SOUPAPE DE DOSAGE D'UN MILIEU D'ÉCOULEMENT

(30) Priorität: 09.02.2012 DE 102012201940
(43) Veröffentlichungstag der Anmeldung: 17.12.2014
(73) Patentinhaber: Robert Bosch GmbH, 70442 Stuttgart (DE)
(72) Erfinder: MUELLER, Martin, 71696 Moeglingen (DE)
(86) Internationale Anmeldenummer: PCT/EP2013/051411
(87) Internationale Veröffentlichungsnummer: WO 2013/117441

(56) Entgegenhaltungen:
- DE-A1- 4 421 881
- DE-A1-102005 037 265
- US-A- 5 238 192

## Beschreibung

### Stand der Technik

Die Erfindung geht aus von einem Ventil zum Zumessen eines strömenden Mediums, insbesondere eines Fluids, nach dem Oberbegriff des Anspruchs 1.

Ein bekanntes Einspritzventil zur Einspritzung von Kraftstoff (DE 10 2006 040 648 A1) weist einen hohlzylindrischen Ventilkörper mit mindestens einer radialen Zulaufbohrung auf, die das eine Ventilnadel aufnehmende, hohle Innere des Ventilkörpers mit einem Zulauf zum Zuführen des Kraftstoffs verbindet. In Strömungsrichtung des Kraftstoffs vor der Zulaufbohrung ist ein ringförmiger Filter zum Filtern des Kraftstoffs angeordnet. Der Filter weist ein als Fixiereinrichtung bezeichnetes Filtergehäuse und ein am Filtergehäuse fixiertes Filtergewebe aus Metall oder Kunststoff auf. Das Filtergehäuse ist vorzugsweise eine Kunststoffumspritzung des Filtergewebes und dichtet den Filter am Ventilkörper ab. Auf der Abströmseite des Filters ist am Ventilkörper ein Stützkörper in Form eines Ringwulstes angeformt, der im Bereich der mindestens einen Zulaufbohrung ausgespart ist und etwa mittig am Filtergewebe anliegt. Beidseitig des Ringwulstes ist im Ventilkörper je eine Ringnut vorhanden, über die mehrere Zulaufbohrungen miteinander kommunizieren können.

Bei einem ebenfalls bekannten Kraftstoffeinspritzventil (DE 10 2005 037 265 A1) weist der im Kraftstoffstrom angeordnete Filter ein hohlzylindrisches Filtergehäuse mit zwei in axialer Richtung voneinander beabstandeten Auflageringen auf, die über mindestens drei axial sich erstreckende Stege miteinander verbunden sind. Eine rohrförmige Filterfläche aus einem Siebgewebe ist mit dem Filtergehäuse fest verbunden. Auf der Abströmseite des Filters ist ein die Filterfläche abstützender Stützkörper vorgesehen. Der Stützkörper weist einen hohlzylindrischen Stützabschnitt mit die Filterfläche stützenden Erhebungen auf, die beispielsweise rippenförmig ausgebildet sind und nur linienförmig an der Filterfläche anliegen. Zwischen den Erhebungen verbleiben Ablaufkanäle, durch die der gefilterte Kraftstoff abströmen kann. Der Stützkörper ist durch eine im Filtergehäuse vorhandene Einsetzöffnung hindurch in das Filtergehäuse eingeschoben, wonach der hohlzylindrische Stützabschnitt sich über die innere Wandfläche der ringförmigen Filterfläche erstreckt.

### Offenbahrung der Erfindung

Das erfindungsgemäße Ventil mit den Merkmalen des Anspruchs 1 hat den Vorteil, dass die gesamte Filterfläche des Filterrings auf dem Stützring aufliegt und es zu keinem Zeitpunkt zu einer Belastung oder gar Verformung des mechanisch wenig festen Filterrings kommt. Ein Reißen der Filterfläche mit der Gefahr des Hindurchströmens von Verunreinigungen und damit ein Ausfall des Ventils sind zuverlässig verhindert. Der erfindungsgemäße Filter mit dem vorgespannten Stützring ist gegenüber den Filtern mit fertigungstechnisch aufwendigen Stützkörpern am Ventilkörper oder am Filtergehäuse deutlich kostengünstiger zu fertigen.

Durch die in den weiteren Ansprüchen aufgeführten Maßnahmen sind vorteilhafte Weiterbildungen und Verbesserungen des im Anspruch 1 angegebenen Ventils möglich.

Gemäß einer vorteilhaften Ausführungsform der Erfindung wird die radiale Vorspannung des Stützrings in einfacher Weise dadurch erzielt, dass der Außendurchmesser des Stützrings wenig größer ist als der Innendurchmesser des Filterrings. In Einbaulage weitet sich der Stützring auf und presst sich radial gegen den Filterring. Alternativ kann der Stützring auch mit einem längsdurchgehenden Axialspalt versehen werden und durch Aufweitung des Axialspalts in Einbaulage in Umfangsrichtung verspannt werden.

Gemäß einer vorteilhaften Ausführungsform der Erfindung ist der Lochquerschnitt der Durchtrittslöcher im Stützring deutlich größer als die Porengröße der Filterporen im Filterring. Durch die großen Lochquerschnitte des Stützrings wird die effektive Filterfläche des auf dem Stützring aufliegenden Filterrings nur wenig verringert.

Gemäß einer vorteilhaften Ausführungsform der Erfindung besteht der Filterring aus einem feinmaschigen Filtergewebe und der Stützring aus einem grobmaschigen Metallgewebe oder einem gelochten Blech- oder Kunststoffmantel. Ein solches Metallgewebe oder ein solcher Lochmantel besitzt eine ausreichend hohe mechanische Festigkeit, um auch die Belastung des Filters bei teilweise Verstopfung des feinmaschigen Filtergewebes durch Ablagerung standzuhalten.

Gemäß einer vorteilhaften Ausführungsform der Erfindung weist der Filter einen den Filterring umschließenden, steifen Käfig mit zwei axial voneinander beabstandeten Endringen und mehreren, die Endringe miteinander verbindenden, in Umfangsrichtung voneinander beabstandeten Axialstege auf, wobei der Filterring an der Innenseite des Käfigs befestigt ist. Vorzugsweise ist der Käfig aus Kunststoff hergestellt, der von außen einseitig an den Filterring angespritzt ist. Bei dieser Konzeption des Filters ist es von Vorteil, den Stützring an mindestens einem Ringende mit einem im Durchmesser reduzierten Endabschnitt zu versehen. Der vorzugsweise durch Kröpfung gewonnene Endabschnitt ist dabei im lichten Durchmesser wenig kleiner bemessen als der Außendurchmesser eines mindestens eine Zulaufbohrung zur Zumessöffnung enthaltenden Ventilkörpers des Ventils, auf den der Filter, die Zulaufbohrung überdeckend, angeordnet ist, so dass sich der mindestens eine Endabschnitt auf den Ventilkörper aufpresst. Über die Verspannung des mindestens einen Endabschnitts mit dem Ventilkörper erzeugt der Stützring eine radiale Verspannung des Filtergewebes des Filterrings Bei Druckbelastung bzw. Durchbiegung der Filterfläche durch das den Filter radial von außen nach innen durchströmende Medium stützt der eng an dem Filterring anliegende Stützring die wenig belastbare, mechanisch empfindliche Filterfläche des Filterrings spiellos ab. Die axialen Längen von Stützring und Käfig sind so aufeinander abgestimmt, dass der mindestens eine Endabschnitt im Bereich eines Endrings des Käfigs liegt.

Gemäß einer vorteilhaften Ausführungsform der Erfindung trägt eine der Axialstege des Käfigs eine Längsrippe und weist der Stützring einen parallel zur Ringachse sich erstreckenden Axialspalt auf, in den die Längsrippe hineinragt. Durch Längsrippe im Käfig und Axialspalt im Stützring wird ein Verdrehen des Stützrings im Filter verhindert. Zusätzlich können Axialspalt und Längsrippe genutzt werden, um die vorstehend erwähnte Verspannung des Stützrings in Umfangsrichtung durch Aufweitung des Stützrings zu bewirken, indem die den Axialspalt begrenzenden Ringkanten sich kraftschlüssig auf den voneinander abgekehrten Seitenkanten der Längsrippe abstützen.

Gemäß einer vorteilhaften Ausführungsform der Erfindung ist der aus einem gelochten Blech- oder Kunststoffmantel bestehende Stützring aus einer gelochten Platte durch Walzen oder Biegen hergestellt. Die beiden einander zugekehrte Längskanten des Mantels liegen sich entweder unter Belassung des Axialspalts mit Abstand gegenüber oder stoßen stumpf aneinander und sind miteinander verschweißt. Auch eine Überlappung der Mantelenden kommt in Betracht, wobei der Stützring im Bereich der Überlappung geschweißt ist.

In einer nicht erfindungsgemäßen Ausführung ist der Stützring aus einem Draht hergestellt, der mäanderförmig mit einer über die axiale Breite des Stützrings sich erstreckenden Mäanderbreite gebogen und dann zur Ringform gerollt oder gebogen ist. Vorteilhaft sind die beiden von den Drahtenden gebildeten, einander zugekehrten äußeren Mäanderzweige miteinander verschweißt.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
Figur 1 ausschnittweise einen Längsschnitt eines Ventils zum Zumessen eines strömenden Mediums mit einem im Mediumstrom angeordneten Filter,
Figur 2 einen Seitenansicht des Filters im Ventil gemäß Figur 1,
Figur 3 eine Stirnansicht des Filters in Richtung Pfeil III in Figur 2,
Figur 4 einen Schnitt des Filters längs der Linie IV - IV in Figur 3,
Figur 5 einen Schnitt des Filters längs der Linie V - V in Figur 4,
Figur 6 einen Schnitt des Filters längs der Linie VI - VI in Figur 3,
Figur 7 einen vergrößerten, detaillierten Ausschnitt VII in Figur 1 des Filters und eines den Filter tragenden Ventilkörpers des Ventils,
Figur 8 eine gleiche Darstellung des Filters wie in Figur 6 mit einer ersten Modifizierung,
Figur 9 einen Schnitt des Stützrings längs der Linie VI - VI in Figur 3 gemäß einem dritten Ausführungsbeispiel,
Figur 10 eine gleiche Darstellung wie in Figur 9 des Stützrings gemäß einem vierten Ausführungsbeispiel,
Figur 11 eine gleiche Darstellung wie in Figur 9 des Stützrings gemäß einem fünften Ausführungsbeispiel,
Figur 12 eine Stirnansicht des Stützrings gemäß einem sechsten Ausführungsbeispiel,
Figur 13 eine perspektivische Ansicht des Stützrings gemäß einem siebten Ausführungsbeispiel,
Figur 14 eine Abwicklung des Stützrings gemäß einem nicht erfindungsgemäßen Ausführungsbeispiel.

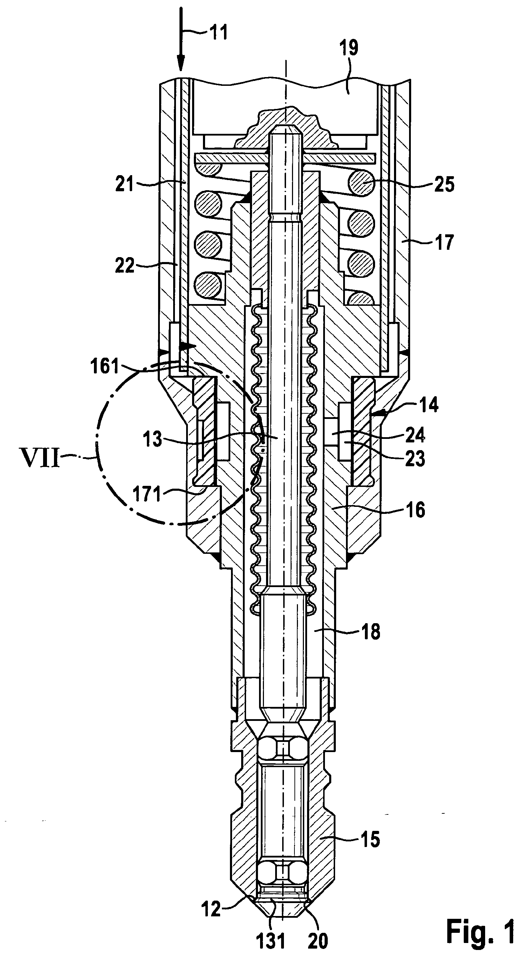

Das in Figur 1 im Längsschnitt dargestellte Ventil zum Zumessen eines strömenden Mediums, insbesondere eines Fluids, wird beispielsweise als Ventil zum Einspritzen von Kraftstoff in den Verbrennungszylinder einer Brennkraftmaschine eingesetzt. Figur 1 zeigt dabei den Längsschnitt des einspritzseitigen Endes des Einspritzventils, wobei das komplette Ventil beispielsweise in DE 10 2009 026 532 A1 dargestellt und beschrieben ist.

Das Ventil weist einen Zufluss 11 für das Medium, also für das Fluid oder den Kraftstoff, und eine Zumessöffnung 12 für das Medium auf, über die mittels eines Ventilglieds oder einer Ventilnadel 13 eine momentane Zumessmenge des Mediums gesteuert wird. In dem zwischen Zufluss und Zumessöffnung 12 sich ausbildenden Mediumstrom ist ein Filter 14 zum Zurückhalten von im Medium enthaltenen Partikeln von der Zumessöffnung 12 angeordnet, wobei der Filter 14 mindestens eine Zulaufbohrung 24 zur Zumessöffnung 12 überdeckt. Die Zumessöffnung 12 ist in einem hohlen Düsenkörper 15 ausgebildet, der koaxial an einem hohlen Ventilkörper 16 angesetzt ist. Der Ventilkörper 16 ist in einem Ventilgehäuse 17, aus diesem teilweise herausragend, aufgenommen. Düsenkörper 15 und Ventilkörper 16 schließen einen der Zumessöffnung 12 vorgelagerten Ventilraum 18 ein, der von der Ventilnadel 13 koaxial durchdrungen ist. Die Ventilnadel 13 tritt am zumessöffnungsfernen Ende mediumdicht aus dem Ventilraum 18 aus und ist hier von einem Aktor 19 beaufschlagt, der vorzugsweise ein piezoelektrische Aktor 19 ist und zusammen mit einer an der Ventilnadel 13 angreifenden Ventilschließfeder 25 die axial verschiebliche Ventilnadel 13 zu einer Hubbewegung antreibt. Die Ventilnadel 13 trägt an ihrem aktorfernen Ende einen Schließkopf 131, der mit einem am Düsenkörper 15 ausgebildeten, die Zumessöffnung 12 umschließenden Ventilsitz 20 zum Schließen und Freigeben der Zumessöffnung 12 zusammenwirkt. Der Aktor 19 ist in einem im Ventilgehäuse 17 konzentrisch festgelegten Rohr 21 aufgenommen, wobei zwischen Rohr 21 und Ventilgehäuse 17 ein mit dem Zufluss 11 in Verbindung stehender Ringspalt 22 verbleibt, der in einer am Ventilkörper 16 ausgebildeten Ringnut 23 mündet. Von der Ringnut 23 führt die mindestens eine als radiale Bohrung in den Ventilkörper 16 eingebrachte Zulaufbohrung 24 in den der Zumessöffnung 12 vorgelagerten Ventilraum 18, wobei bei mehreren Zulaufbohrungen 24 die Ringnut 23 alle Zulaufbohrungen 24 miteinander verbindet. Das unter Systemdruck stehende Medium strömt somit vom Zufluss 11 über den Ringspalt 22, die Ringnut 23 und die eine oder die mehreren Zulaufbohrungen 24 in den Ventilraum 18. Der Schließkopf 131 ist mittels der zwischen Ventilnadel 13 und Ventilkörper 16 sich abstützenden Ventilschließfeder 25 auf den Ventilsitz 20 aufgepresst und wird beim Bestromen des Aktors 19 gegen die Kraft der Ventilschließfeder 25 vom Ventilsitz 20 abgehoben und somit die Zumessöffnung 12 freigegeben.

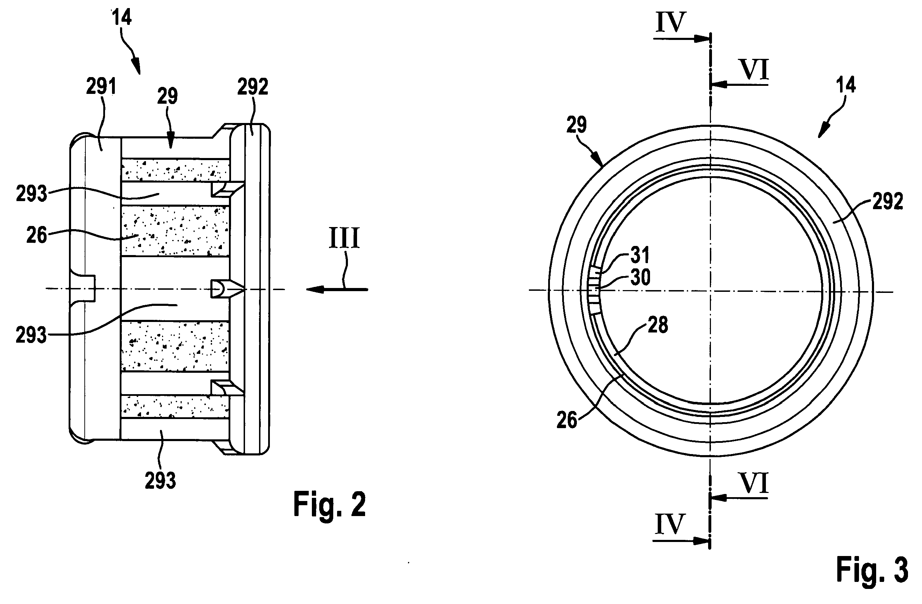

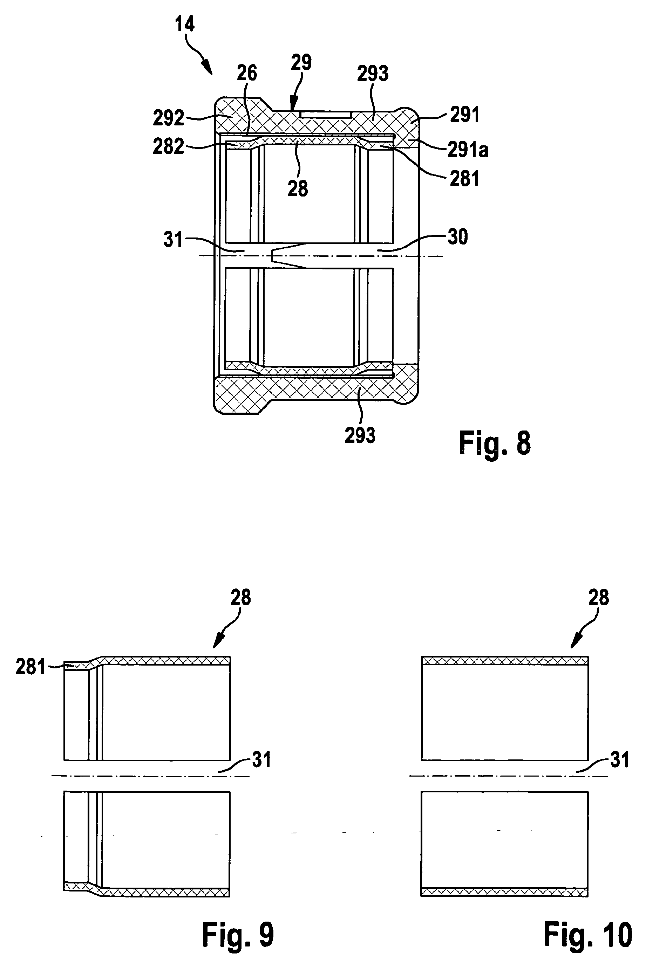

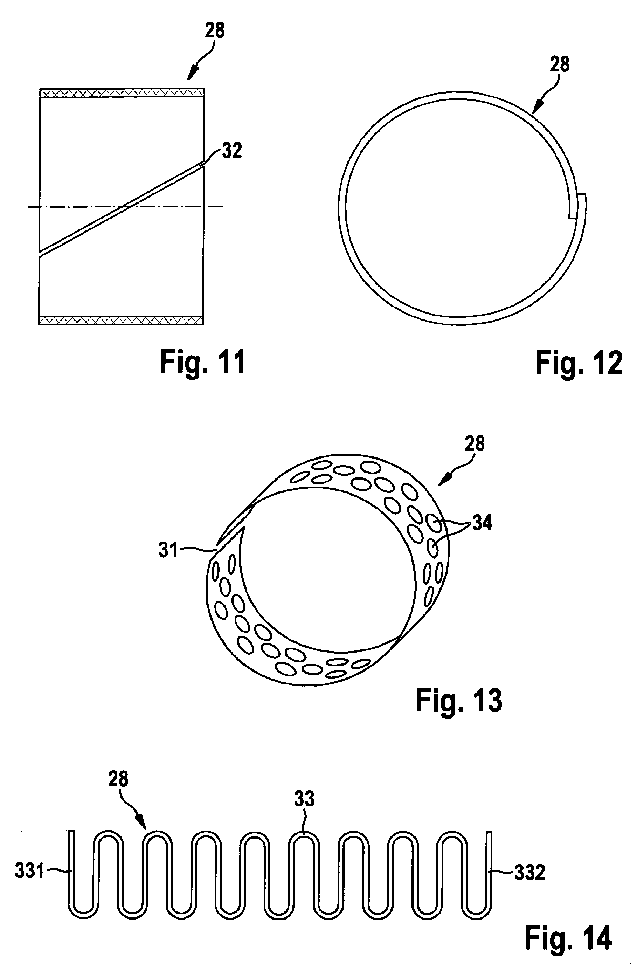

Der im Mediumstrom angeordnete Filter 14 ist auf den Ventilkörper 16 so weit aufgeschoben, dass er die Ringnut 23 und damit die Zulaufbohrungen 24 vollständig überdeckt. In dieser Position wird der Filter 14 zwischen einer am Ventilkörper 16 ausgebildeten Radialschulter 161 und einer am Ventilgehäuse 17 ausgebildeten Radialschulter 171 axial unverschieblich gehalten und von dem Ventilgehäuse 17 radial auf dem Ventilkörper 16 festgelegt. Der Filter 14 besitzt einen Filterring 26 mit einer Vielzahl von feinen Filterporen und weist in der beschriebenen Position des Filters 14 eine zum Zufluss 11 weisende, äußere Anströmseite und eine zur Zumessöffnung 12 weisende, innere Abströmseite auf, wobei zur mechanischen Stabilisierung des mechanisch wenig festen Filterrings 26 auf dessen Abströmseite ein den Filterring 26 abstützender Stützkörper vorhanden ist. Wie aus den in Figur 2 bis 6 dargestellten verschiedenen Ansichten und Schnitten des Filters 14 ersichtlich ist, ist der Stützkörper als ein radial elastischer Stützring 28 mit einer Vielzahl von Durchtrittslöchern ausgebildet, der mit radialer Vorspannung an dem Filterring 26 anliegt. Hierzu ist der Außendurchmesser des Stützrings 28 um ein die Vorspannung erzeugendes Maß größer gemacht als der Innendurchmesser des Filterrings 26. Der Lochquerschnitt der Durchtrittslöcher im Stützring 28 ist um ein Vielfaches größer als die Porengröße der Filterporen im Filterring 26. Bei dem Filter 14 gemäß Figur 1 bis 7 und dem Filter gemäß Figur 8 sowie den weiteren Filtern 14 mit den Stützringen 28 gemäß Figur 9 bis 11 ist jeweils der Filterring 26 aus einem feinmaschigen Filtergewebe und der Stützring 28 aus einem grobmaschigen Metallgewebe hergestellt. Der Übersichtlichkeit halber ist in den genannten Figuren das grobmaschige Metallgewebe nur in Figur 10 angedeutet. Alternativ kann der Stützring 28 auch aus einem gelochten Blech- oder Kunststoffmantel bestehen, wie ein solcher in Figur 12 in Stirnansicht und in Figur 13 in perspektivischer Darstellung zu sehen ist. Die Durchtrittslöcher im Stützring 28 sind in Figur 13 mit 34 gekennzeichnet. Ein solcher Stützring 28 wird z. B. aus einer gelochten, viereckigen Platte mit jeweils zwei parallelen Längs- und Querkanten durch Walzen oder Biegen gefertigt. In Figur 13 stehen sich die beiden Querkanten mit Abstand unter Belassung eines Axialspalts 31 gegenüber, in Figur 12 überlappen sich die beiden Plattenenden und sind miteinander verschweißt. Wie hier nicht dargestellt ist, können auch die beiden Querkanten stumpf aneinanderstoßen und längs der Stoßstelle miteinander verschweißt sein.

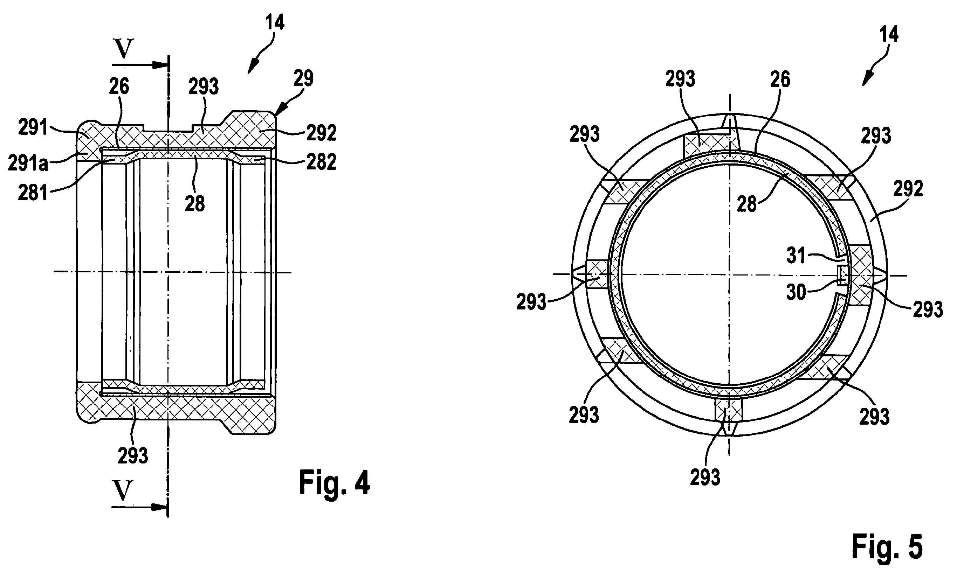

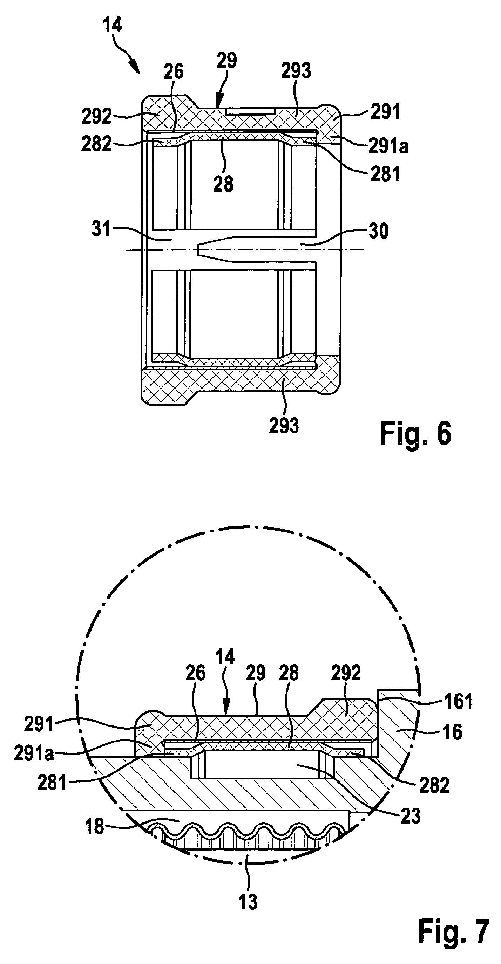

Der Filterring 26 ist in einem steifen Käfig 29 aufgenommen, wie er in Figur 2 in Seitenansicht, in Figur 3 in Draufsicht und in Figur 4 bis 6 in verschiedenen Schnittdarstellungen zu sehen ist. Der Käfig 29 weist zwei axial voneinander beabstandete Endringe 291 und 292 und mehrere die beiden Endringe 291, 292 miteinander verbindende Axialstege 293 auf, die in Umfangsrichtung voneinander beabstandet sind. Der Endring 291 besitzt einen radial nach innen vorspringenden Bund 291a, über den der Käfig 29 auf dem Ventilkörper 16 mit radialer Pressung aufsitzt, während die Stirnfläche des Endrings 292 als radiale Dichtfläche an die Radialschulter 161 des Ventilkörpers 16 angepresst ist (Figur 1 und 7). Der Filterring 26 ist an der Innenseite des Käfigs 29 befestigt. Vorzugsweise ist der Käfig 29 aus Kunststoff hergestellt und der Kunststoff an den aus dem feinmaschigen Filtergewebe bestehenden Filterring 26 außen einseitig angespritzt.

Wie in der Schnittdarstellung gemäß Figur 4, 6 und 7 zu sehen ist, weist der Stützring 28 an seinen beiden Enden jeweils einen im Durchmesser reduzierten Endabschnitt 281 bzw. 282 auf. Die vorzugsweise durch Kröpfung herbeigeführte Durchmesserreduzierung ist so vorgenommen, dass der Innendurchmesser der Endabschnitte 281, 282 wenig kleiner ist als der Außendurchmesser des Ventilkörpers 16 im Bereich des Filtersitzes auf dem Ventilkörper 1, so dass beim Aufsetzen des Filters 14 auf den Ventilkörper 16 sich die Endabschnitte 281, 282 auf dem Ventilkörper 16 verspannen (Figur 7). Über diese Verspannung am Ventilkörper 16 wird eine radiale Verspannung des Filtergewebes des Filterrings erzeugt. Bei Druckbelastung bzw. bei Durchbiegung des Filtergewebes durch das von außen nach innen den Filter 11 durchströmenden Medium stützt der auch im Mittelbereich des Filterrings 26 eng an dem Filterring 26 anliegende Stützring 28 das mechanisch wenig belastbare feinmaschige Filtergewebe zuverlässig ab. Die axiale Länge des Stützrings 28 ist auf die axiale Länge des Käfigs 29 so abgestimmt, dass jeweils ein Endabschnitt 281, 282 im Bereich eines Endrings 291 bzw. 292 liegt.

Um ein Verdrehen des Stützrings 28 innerhalb des Filters 14 zu verhindern, ist einer der Axialstege 293 des Käfigs 29 mit einer Längsrippe 30 versehen, die auf der Innenseite des Axialstegs 293 über mindestens einen Teil des Axialstegs 293 verläuft, und der Stützring 28 weist einen parallel zur Ringachse über die gesamte Ringbreite sich erstreckenden Axialspalt 31 auf, in den die Längsrippe 30 hineinragt (Figur 3, 5 und 6). Die Längsrippe 30 kann auch dazu genutzt werden, den Stützring 28 in Umfangsrichtung zu verspannen. Wie Figur 8 zeigt ist in diesem Fall der Axialspalt 31 im Stützring 28 wenig schmaler bemessen als die in Umfangsrichtung gesehene Breite der Längsrippe 30. In Einbaulage, nach dem Einsetzen des Stützrings 28 in den Käfig 29, stützen sich dann die den Axialspalt 31 begrenzenden beiden Axialkanten des Stützrings 28 unter radialem Aufweiten des Stützrings 28 kraftschlüssig an den voneinander abgekehrten Seitenkanten der Längsrippe 30 ab. In einem solchen Fall ist es von Vorteil, das grobmaschige Metallgewebe des Stützrings 28 stärker nachgiebig auszuführen, was z. B. durch eine diagonale Anordnung der Gewebefäden erreicht werden kann.

In Figur 9 bis 11 sind weitere alternative Ausführungsformen des Stützrings 28 dargestellt. Der in Figur 9 im Schnitt längs der Linie VI - VI in Figur 3 dargestellte Stützring 28 weist nur einen Endabschnitt 281 mit reduziertem Durchmesser auf. Bei dem in Figur 10 ebenfalls im Schnitt längs der Linie VI - VI in Figur 3 dargestellten Stützring 28 ist auf die Endabschnitte mit reduziertem Durchmesser gänzlich verzichtet worden. Sowohl der Stützring 28 in Figur 9 als auch der Stützring 28 in Figur 10 weisen wie der Stützring 28 im Filter 14 gemäß Figur 2 bis 7 und im Filter 14 gemäß Figur 8 den über die gesamte Ringbreite sich parallel zur Ringachse erstreckenden Axialspalt 31 auf. Im Gegensatz hierzu besitzt der Stützring 28 gemäß Figur 11 einen unter einem spitzen Winkel zur Ringachse über die axiale Ringbreite verlaufenden Schrägspalt 32, während der Stützring 28 gemäß Figur 12 vollständig geschlossen ist, also keinen Axialspalt besitzt. Bei Verwendung der Stützringe 28 gemäß Figur 11 und 12 weist der mit dem Filterring 26 verbundene Käfig 29 keine Längsrippe auf.

In einer nicht erfindungsgemäßen Ausführungsvariante des Stützrings 28 ist dieser aus einem Draht 33 hergestellt, der mäanderförmig mit einer über die axiale Breite des Stützrings 28 sich erstreckenden Mäanderbreite gebogen ist. In Figur 14 ist dieser Stützring 28 in Abwicklung dargestellt. Nach Krümmen, Rollen oder Biegen des mäanderförmig gebogenen Drahts 33 zu dem Stützring 28 mit einem an den Filterring 26 entsprechend angepassten Außendurchmesser liegen die von den Drahtenden gebildeten beiden äußeren Mäanderzweige 331, 332 einander parallel gegenüber und sind vorzugsweise miteinander verschweißt. Zwischen den beiden äußeren Mäanderzweigen 331, 332 kann aber auch der Axialspalt 31 vorgehalten werden. Ebenso wie die anderen Stützringe 28 gemäß Figur 9 bis 13 wird auch dieser Stützring 28 in das Innere des vom Käfig 29 gehaltenen Filterrings 26 eingesetzt und presst sich radial an dessen Filterfläche an.

## Patentansprüche

1. Ventil, insbesondere Kraftstoffeinspritzventil, zum Zumessen eines strömenden Mediums, insbesondere eines Fluids, insbesondere eines Kraftstoffs, mit einem Filter (14), der in einem von einem Zufluss (11) zu einer Zumessöffnung (12) fließenden Mediumstrom angeordnet ist und einen eine Vielzahl von Filterporen enthaltenden Filterring (26) mit einer zum Zufluss (11) weisenden äußeren Anströmseite und einer zur Zumessöffnung (11) weisenden inneren Abströmseite aufweist, und mit einem den Filterring (26) auf dessen Abströmseite abstützenden Stützkörper, **dadurch gekennzeichnet, dass** der Stützkörper als ein radial elastischer Stützring (28) mit einer Vielzahl von Durchtrittslöchern ausgebildet ist, der mit radialer Vorspannung an dem Filterring (26) anliegt.

2. Ventil nach Anspruch 1, **dadurch gekennzeichnet, dass** der Außendurchmesser des Stützrings (28) um ein die Vorspannung erzeugendes Maß größer ist als der Innendurchmesser des Filterrings (26).

3. Ventil nach Anspruch 1 oder 2, **dadurch gekennzeichnet, dass** der Lochquerschnitt der Durchtrittslöcher im Stützring (28) um ein Vielfaches größer ist als die Porengröße der Filterporen im Filterring (26).

4. Ventil nach Anspruch 3, **dadurch gekennzeichnet, dass** der Filterring (26) aus einem feinmaschigen Filtergewebe und der Stützring (28) aus einem grobmaschigen Metallgewebe besteht.

5. Ventil nach Anspruch 3, **dadurch gekennzeichnet, dass** der Filterring (26) aus einem feinmaschigen Filtergewebe und der Stützring (28) aus einem gelochten Blech- oder Kunststoffmantel besteht.

6. Ventil nach einem der Ansprüche 1 bis 5, **dadurch gekennzeichnet, dass** der Filter (14) einen den Filterring (26) umschließenden, steifen Käfig (29) mit zwei axial voneinander beabstandeten Endringen (291, 292) und mehreren die Endringe (291, 292) miteinander verbindenden, in Umfangsrichtung voneinander beabstandeten Axialstegen (293) aufweist und dass der Filterring (26) an der Innenseite des Käfigs (29) festgelegt ist.

7. Ventil nach Anspruch 6, **dadurch gekennzeichnet, dass** der Käfig (29) aus Kunststoff besteht und der Kunststoff außen an den Filterring (26) angespritzt ist.

8. Ventil nach Anspruch 6 oder 7, **dadurch gekennzeichnet, dass** der Stützring (28) an mindestens einem Ende einen im Durchmesser reduzierten Endabschnitt (281, 282) aufweist.

9. Ventil nach Anspruch 8, **dadurch gekennzeichnet, dass** die axialen Längen von Stützring (28) und Käfig (29) so aufeinander abgestimmt sind, dass der mindestens eine Endabschnitt (281, 282) im Bereich eines Endrings (291, 292) des Käfigs (29) liegt.

10. Ventil nach Anspruch 8 oder 9, **dadurch gekennzeichnet, dass** der Filter (14) in einem Ventilgehäuse (17) aufgenommen ist und auf einem mindestens eine Zulaufbohrung (24) zur Zumessöffnung (12) aufweisenden Ventilkörper (16), die Zulaufbohrung (24) überdeckend, sitzt und dass der Innendurchmesser des mindestens einen Endabschnitts (281, 282) des Stützrings (28) so bemessen ist, dass der auf dem Ventilkörper (16) sitzende Stützring (28) über den mindesten einen Endabschnitt (281, 282) eine radiale Verspannung erzeugt.

11. Ventil nach einem der Ansprüche 6 bis 10, **dadurch gekennzeichnet, dass** einer der Axialstege (293) des Käfigs (29) eine Längsrippe (30) trägt und dass der Stützring (28) einen parallel zur Ringachse über die axiale Ringbreite sich erstreckenden Axialspalt (31) aufweist, in den die Längsrippe (30) hineinragt.

12. Ventil nach Anspruch 11, **dadurch gekennzeichnet, dass** die den Axialspalt (31) begrenzenden, einander gegenüberliegenden Axialkanten des Stützrings (28) sich an die Längsrippe (30) anpressen.

13. Ventil nach einem der Ansprüche 1 bis 10, **dadurch gekennzeichnet, dass** der Stützring (28) einen unter einem spitzen Winkel zur Ringachse über die Ringbreite verlaufenden Schrägspalt (32) aufweist.

14. Ventil nach Anspruch 5, **dadurch gekennzeichnet, dass** der Stützring (28) aus einer gelochten, viereckigen Platte mit jeweils zwei parallelen Längs- und Querkanten gebogen und an einer sich dadurch ergebenden, stumpfen oder überlappenden Stoßstelle der Querkanten verschweißt ist.

## Claims

1. Valve, in particular fuel injection valve, for metering in a flowing medium, in particular a fluid, in particular a fuel, having a filter (14) which is arranged in a medium stream which flows from an inflow (11) to a metering opening (12) and has a filter ring (26) which contains a multiplicity of filter pores with an outer inflow side which points towards the inflow (11) and an inner outflow side which points towards the metering opening (11), and with a supporting body which supports the filter ring (16) on its outflow side, **characterized in that** the supporting body is configured as a radially elastic supporting ring (28) with a multiplicity of passage holes, which supporting ring (28) bears with radial prestress against the filter ring (26).

2. Valve according to Claim 1, **characterized in that** the external diameter of the supporting ring (28) is greater than the internal diameter of the filter ring (26) by a dimension which produces the prestress.

3. Valve according to Claim 1 or 2, **characterized in that** the hole cross section of the passage holes in the supporting ring (28) is multiple times greater than the pore size of the filter pores in the filter ring (26).

4. Valve according to Claim 3, **characterized in that** the filter ring (26) consists of a finely woven filter fabric, and the supporting ring (28) consists of a coarsely woven metal fabric.

5. Valve according to Claim 3, **characterized in that** the filter ring (26) consists of a finely woven filter fabric, and the supporting ring (28) consists of a perforated sheet metal or plastic shell.

6. Valve according to one of Claims 1 to 5, **characterized in that** the filter (14) has a rigid cage (29) which encloses the filter ring (26), with two end rings (291, 292) which are spaced apart axially from one another and a plurality of axial webs (293) which connect the end rings (291, 292) to one another and are spaced apart from one another in the circumferential direction, and **in that** the filter ring (26) is fixed on the inner side of the cage (29).

7. Valve according to Claim 6, **characterized in that** the cage (29) consists of plastic and the plastic is moulded onto the outside of the filter ring (26).

8. Valve according to Claim 6 or 7, **characterized in that**, at at least one end, the supporting ring (28) has an end section (281, 282) of reduced diameter.

9. Valve according to Claim 8, **characterized in that** the axial lengths of the supporting ring (28) and the cage (29) are adapted to one another in such a way that the at least one end section (281, 282) lies in the region of an end ring (291, 292) of the cage (29).

10. Valve according to Claim 8 or 9, **characterized in that** the filter (14) is received in a valve housing (17) and is seated on a valve body (16) which has at least one feed bore (24) to the metering opening (12), so as to cover the feed bore (24), and **in that** the internal diameter of the at least one end section (281, 282) of the supporting ring (28) is dimensioned in such a way that the supporting ring (28) which is seated on the valve body (16) generates a radial prestress over the at least one end section (281, 282).

11. Valve according to one of Claims 6 to 10, **characterized in that** one of the axial webs (293) of the cage (29) supports a longitudinal rib (30), and **in that** the supporting ring (28) has an axial gap (31) which extends over the axial ring width parallel to the ring axis and into which the longitudinal rib (30) protrudes.

12. Valve according to Claim 11, **characterized in that** the axial edges of the supporting ring (28) which lie opposite one another and delimit the axial gap (31) are pressed onto the longitudinal rib (30).

13. Valve according to one of Claims 1 to 10, **characterized in that** the supporting ring (28) has an oblique gap (32) which runs over the ring width at an acute angle with respect to the ring axis.

14. Valve according to Claim 5, **characterized in that** the supporting ring (28) is bent from a perforated, rectangular plate with in each case two parallel longitudinal and transverse edges and is welded on a resulting, blunt or overlapping butt joint of the transverse edges.

## Revendications

1. Soupape, en particulier soupape d'injection de carburant, pour le dosage d'un milieu en écoulement, en particulier d'un fluide et notamment d'un carburant, la soupape présentant un filtre (14) disposé dans un écoulement de milieu s'écoulant entre une amenée (11) et une ouverture (12) de dosage, et un anneau de filtre (26) contenant de nombreux pores de filtration et présentant un côté extérieur d'amenée tourné vers l'amenée (11) et un côté intérieur d'évacuation tourné vers l'ouverture de dosage (11), ainsi qu'un corps de soutien qui s'appuie sur le côté d'évacuation de l'anneau de filtre (26),
**caractérisée en ce que**
le corps de soutien est configuré comme bague élastique de soutien (28) dotée de plusieurs trous de passage et reposant avec une précontrainte radiale sur l'anneau de filtre (26).

2. Soupape selon la revendication 1, **caractérisée en ce que** le diamètre extérieur de l'anneau de soutien (28) est supérieur au diamètre intérieur de l'anneau de filtre (26) d'une valeur qui forme la précontrainte.

3. Soupape selon les revendications 1 ou 2, **caractérisée en ce que** la section transversale des trous de passage ménagés dans l'anneau de soutien (28) est un multiple de la taille des pores de filtration de l'anneau de filtre (26).

4. Soupape selon la revendication 3, **caractérisée en ce que** l'anneau de filtre (26) est constitué d'un tissu de filtre à fines mailles et l'anneau de soutien (28) d'un treillis métallique à grosses mailles.

5. Soupape selon la revendication 3, **caractérisée en ce que** l'anneau de filtre (26) est constitué d'un treillis de filtre à fines mailles et l'anneau de soutien (28) d'une enveloppe perforée en tôle ou en matière synthétique.

6. Soupape selon l'une des revendications 1 à 5, **caractérisée en ce que** le filtre (14) présente une cage rigide (29) qui entoure l'anneau de filtre (26) et dotée de deux anneaux d'extrémité (291, 292) situés à distance axiale mutuelle et de plusieurs nervures axiales (293) situées à distance les unes des autres dans la direction périphérique et reliant l'un à l'autre les anneaux d'extrémité (291, 292), et **en ce que** l'anneau de filtre (26) est fixé sur le côté intérieur de la cage (29).

7. Soupape selon la revendication 6, **caractérisée en ce que** la cage (29) est réalisée en matière synthétique et **en ce que** la matière synthétique est injectée de l'extérieur sur l'anneau de filtre (26).

8. Soupape selon les revendications 6 ou 7, **caractérisée en ce que** l'anneau de soutien (28) présente en au moins une extrémité une partie d'extrémité (281, 282) de plus petit diamètre.

9. Soupape selon la revendication 8, **caractérisée en ce que** les longueurs axiales de l'anneau de soutien (28) et la cage (29) sont accordées l'une à l'autre de telle sorte que la ou les parties d'extrémité (281, 282) reposent au niveau d'un anneau d'extrémité (291, 292) de la cage (29).

10. Soupape selon les revendications 8 ou 9, **caractérisée en ce que** le filtre (14) est repris dans un boîtier (17) de soupape et repose sur un corps de soupape (16) présentant au moins un alésage d'amenée (24) conduisant à l'ouverture de dosage (12), en recouvrant l'alésage d'amenée (24) et **en ce que** le diamètre intérieur de la ou des parties d'extrémité (281, 282) de l'anneau de soutien (28) est dimensionné de telle sorte que l'anneau de soutien (28) reposant sur le corps de soupape (16) forme une précontrainte radiale par l'intermédiaire de la ou des parties d'extrémité (281, 282).

11. Soupape selon l'une des revendications 6 à 10, **caractérisée en ce que** l'une des nervures axiales (293) de la cage (29) porte une moulure longitudinale (30) et **en ce que** l'anneau de soutien (28) présente un interstice axial (31) qui s'étend parallèlement à l'axe de l'anneau sur la largeur axiale de l'anneau et dans laquelle s'enfonce la moulure longitudinale (30).

12. Soupape selon la revendication 11, **caractérisée en ce que** les bords axiaux de l'anneau de soutien (28), qui délimitent l'interstice axiale (31) et situés l'un en face de l'autre repoussent la moulure longitudinale (30).

13. Soupape selon l'une des revendications 1 à 10, **caractérisée en ce que** l'anneau de soutien (28) présente sur la largeur de l'anneau un interstice étroit (32) qui forme un angle aigu avec l'axe de l'anneau.

14. Soupape selon la revendication 5, **caractérisée en ce que** l'anneau de soutien (28) est formé d'une plaque perforée rectangulaire pliée présentant deux côtés longitudinaux parallèles et deux côtés transversaux parallèles et soudée bout à bout ou en superposition sur un emplacement de butée des bords transversaux ainsi obtenus.
